(19) **Europäisches Patentamt / European Patent Office / Office européen des brevets**

(11) **EP 4 061 662 B1**

(12) **FASCICULE DE BREVET EUROPEEN**

(45) Date de publication et mention
de la délivrance du brevet:
**29.11.2023 Bulletin 2023/48**

(21) Numéro de dépôt: **20799768.5**

(22) Date de dépôt: **15.10.2020**

(51) Classification Internationale des Brevets (IPC):
**B60K 6/48** *(2007.10)* **B60K 6/52** *(2007.10)*
**B60L 15/20** *(2006.01)* **B60W 10/02** *(2006.01)*
**B60W 10/08** *(2006.01)* **B60W 20/40** *(2016.01)*
**B60W 50/06** *(2006.01)*

(52) Classification Coopérative des Brevets (CPC):
**B60K 6/48; B60K 6/52; B60L 15/2054;**
**B60W 10/02; B60W 10/08; B60W 20/40;**
**B60W 50/06;** B60W 2050/0012; B60W 2050/0021;
B60W 2050/0042; B60W 2510/081;
B60W 2510/082; B60W 2710/081; Y02T 10/62;
Y02T 10/64; (Cont.)

(86) Numéro de dépôt international:
**PCT/FR2020/051829**

(87) Numéro de publication internationale:
**WO 2021/099699 (27.05.2021 Gazette 2021/21)**

(54) **PROCEDE DE PILOTAGE D'UNE MACHINE MOTRICE ANTICIPANT UN REGIME DE CONSIGNE LORS D'UNE PHASE DE SYNCHRONISATION**

VERFAHREN ZUR STEUERUNG EINER ANTRIEBSMASCHINE MIT VORWEGNAHME EINER SOLLGESCHWINDIGKEIT WÄHREND EINER SYNCHRONISIERUNGSPHASE

METHOD FOR CONTROLLING A DRIVING MACHINE ANTICIPATING A SETPOINT SPEED DURING A SYNCHRONISATION PHASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2019 FR 1912979**

(43) Date de publication de la demande:
**28.09.2022 Bulletin 2022/39**

(73) Titulaire: **PSA Automobiles SA**
**78300 Poissy (FR)**

(72) Inventeurs:
• **BARDET, Arnaud**
**78150 LE CHESNAY-ROCQUENCOURT (FR)**
• **FREIRE SUAREZ, Violette**
**78150 LE CHESNAY-ROCQUENCOURT (FR)**

(56) Documents cités:
**WO-A1-2018/127634     FR-A1- 2 954 441**
**US-A1- 2011 178 662**

EP 4 061 662 B1

(52) Classification Coopérative des Brevets (CPC):
(Cont.)
Y02T 10/72

**Description**

La présente invention porte sur un procédé de pilotage d'une machine motrice anticipant un régime de consigne lors d'une phase de synchronisation. L'invention trouve une application particulièrement avantageuse avec les chaînes de traction électriques ou hybrides, notamment pour un véhicule automobile.

De façon connue en soi, une chaîne de traction de véhicule automobile peut comporter une machine de traction notamment un moteur électrique, monté sur le train arrière du véhicule automobile et associé à un réducteur et à un dispositif de couplage et de découplage du moteur électrique de traction avec le train arrière. Le réducteur permet de rendre compatible la vitesse de rotation du moteur électrique très élevée avec celle des roues du véhicule.

Le dispositif de couplage et de découplage permet de disposer de deux modes de roulage du véhicule automobile, à savoir un premier mode dans lequel le moteur électrique est découplé et en attente de couplage avec le train arrière et un deuxième mode dans lequel le moteur électrique est couplé avec le train arrière de façon à pouvoir fournir une puissance électrique supplémentaire aux roues du véhicule automobile.

Avant de réaliser l'accouplement de la machine de traction avec le train du véhicule, on réalise une phase de synchronisation du régime de la machine motrice avec le régime des roues, le cas échéant à un rapport de démultiplication du réducteur près.

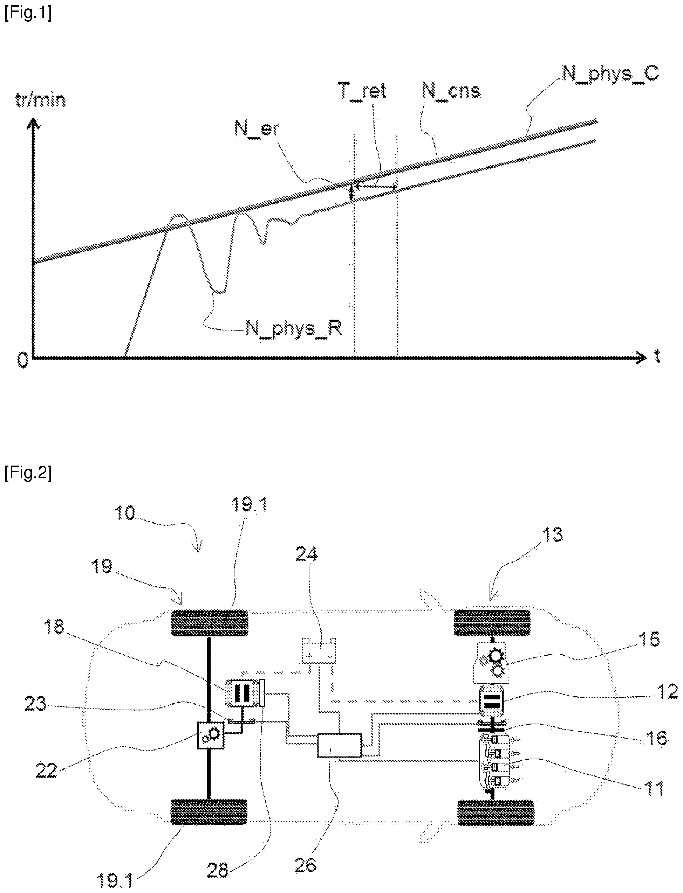

Comme on peut le voir sur la figure 1, lors de cette phase de synchronisation, une consigne de régime $N\_cns$ correspondant au régime cible $N\_phys\_C$ que l'on souhaite voir la machine motrice atteindre est envoyée au contrôleur de régime de la machine motrice.

Du fait de l'architecture électronique multi-calculateurs de la chaîne de traction comportant un superviseur global distinct du contrôleur de régime de la machine motrice, il peut exister un temps de retard $T\_ret$ entre l'instant où le régime de consigne $N\_cns$ est généré par le superviseur et l'instant où le régime de consigne $N\_cns$ est reçu et traité par le contrôleur de régime pour commander la machine motrice.

Lorsque la consigne de régime $N\_cns$ varie, par exemple pour suivre l'accélération du véhicule, le retard $T\_ret$ provoque une erreur $N\_er$ dite "erreur de traînée" sur le régime réel obtenu $N\_phys\_R$. Dans le cas d'un accouplement de la machine motrice avec un crabot, une telle erreur de traînée peut dégrader l'agrément de conduite du véhicule, voire empêcher la fermeture du crabot.

On connait par exemple du document de brevet FR-A1-2954441 un procédé de pilotage d'une machine motrice selon le préambule de la revendication 1.

L'invention vise à remédier efficacement à ces inconvénients en proposant un procédé de pilotage d'une machine motrice montée sur un train de véhicule automobile muni de roues, ladite machine motrice étant associée à un dispositif de couplage et de découplage apte à sélectivement coupler ou découpler ladite machine motrice avec ledit train du véhicule automobile. Lors d'une phase de synchronisation d'un régime de la machine motrice avec un régime des roues, le cas échéant à un rapport de démultiplication près, ledit procédé comporte:

- une étape de détermination d'un régime de consigne de la machine motrice à partir d'une dérivée en fonction du temps d'un régime cible à atteindre par la machine motrice et d'une durée de retard relative à l'obtention du régime de consigne, et
- une étape d'envoi du régime de consigne précédemment déterminé à un contrôleur de régime de la machine motrice.

L'invention permet ainsi, en tenant compte de la durée de retard et de la dérivée du régime cible pour l'élaboration de la consigne de régime, de maîtriser précisément le régime de la machine motrice lors d'une phase de synchronisation avec les roues du véhicule et donc de garantir la fermeture du dispositif de couplage et de découplage, ainsi que l'agrément de conduite du véhicule automobile.

Selon une mise en oeuvre, le régime de consigne $N\_cns$ de la machine motrice est déterminé à partir de la relation suivante:

$$N\_cns = N\_phys\_C + T\_ret \times d/dt(N\_phys\_C)$$

- $N\_phys\_C$ étant le régime cible à atteindre par la machine motrice,
- $T\_ret$ étant la durée de retard relative à l'obtention du régime de consigne.

Les grandeurs $N\_cns$, $N\_phys\_C$ et $T\_ret$ sont des grandeurs signées et peuvent donc être indifféremment positives ou négatives.

Selon une mise en oeuvre, la durée de retard relative à l'obtention du régime de consigne correspond à la durée entre:

- un instant où le régime de consigne est généré par un superviseur et
- un instant où le régime de consigne est reçu et traité par le contrôleur de régime distinct du superviseur.

Le procédé selon l'invention pourra être mis en oeuvre pour une variation positive d'un régime de la machine motrice.

Le procédé selon l'invention pourra être mis en oeuvre pour une variation négative d'un régime de la machine motrice.

L'invention a également pour objet un calculateur comportant une mémoire stockant des instructions logicielles pour la mise en oeuvre du procédé de pilotage d'une machine motrice tel que précédemment défini.

L'invention a également pour objet un Véhicule automobile comprenant

- le train muni de roues,
- la machine motrice montée sur le train,
- le dispositif de couplage et de découplage associé à la machine motrice et apte à sélectivement coupler ou découpler ladite machine motrice avec ledit train,
- un calculateur tel que précédemment défini.

La machine motrice est par exemple un moteur électrique de traction.

Le dispositif de couplage et de découplage est par exemple un crabot.

Ce véhicule comprend par exemple un réducteur de vitesse, le dispositif de couplage et de découplage étant associé au réducteur de vitesse.

Le train est par exemple un train arrière du véhicule.

L'invention sera mieux comprise à la lecture de la description qui suit et à l'examen des figures qui l'accompagnent. Ces figures ne sont données qu'à titre illustratif mais nullement limitatif de l'invention.

[Fig. 1] La figure 1, déjà décrite, est une représentation graphique de l'évolution, en fonction du temps, d'un régime réel, d'un régime cible souhaité, et d'un régime de consigne de la machine motrice généré sans compensation de retard par un procédé selon l'état de la technique;

[Fig. 2] La figure 2 est une représentation schématique d'un exemple de chaîne de traction pour véhicule automobile mettant en oeuvre un procédé de pilotage selon la présente invention;

[Fig. 3] La figure 3 est une représentation graphique de l'évolution, en fonction du temps, d'un régime réel, d'un régime cible souhaité, et d'un régime de consigne de la machine motrice généré avec compensation de retard par un procédé selon la présente invention.

La figure 2 montre une chaîne de traction 10 pour véhicule automobile comportant un moteur thermique 11 et un moteur électrique de traction 12 montés sur un train 13 d'un véhicule automobile, notamment un train avant. Le moteur thermique 11 est par exemple un moteur thermique à quatre cylindres. En variante, le moteur thermique 11 pourra bien entendu comporter un nombre différent de cylindres, notamment trois cylindres ou plus de quatre cylindres. Le moteur thermique 11 pourra être associé à un démarreur pour assurer son démarrage à froid.

Le moteur thermique 11 est accouplé à une boîte de vitesses 15 par l'intermédiaire d'un embrayage 16. Un arbre de sortie de la boîte de vitesses 15 est connecté aux roues par l'intermédiaire d'un différentiel (non représenté). La boîte de vitesses 15 est par exemple une boîte de vitesses automatique, notamment à trains épicycloïdaux.

Le moteur électrique de traction 12 est disposé entre l'embrayage 16 et la boîte de vitesses 15. L'embrayage 16 pourra ainsi isoler le moteur électrique de traction 12 par rapport au moteur thermique 11 lorsque le moteur électrique 12 assure une traction du véhicule dans un mode de roulage électrique.

Une machine motrice 18 est montée sur le train arrière 19 du véhicule automobile par l'intermédiaire d'un réducteur 22 et d'un dispositif de couplage et de découplage 23 du moteur électrique de traction 18 avec le train arrière 19. La machine motrice 18 est en l'occurrence un deuxième moteur électrique de traction. En variante, la machine motrice 18 pourra prendre la forme d'un moteur thermique ou hydraulique.

Le dispositif de couplage et de découplage 23 pourra prendre un état ouvert dans lequel le moteur électrique de traction 18 est désaccouplé par rapport au train arrière 19 et un état fermé dans lequel le moteur électrique de traction 18 est accouplé avec le train arrière 19. Le dispositif de couplage et de découplage 23 est de préférence un dispositif à crabot. En variante, le dispositif de couplage et de découplage 23 est un embrayage.

Une batterie 24 est reliée électriquement au moteur électrique de traction 12 et au moteur électrique de traction 18. La batterie 24 est ici commune aux deux moteurs électriques de traction 12, 18. En variante, on utilise une batterie 24 associée à chaque moteur électrique de traction 12, 18.

Le premier moteur électrique de traction 12 et le deuxième moteur électrique de traction 18 pourront présenter une haute tension de fonctionnement, notamment une tension supérieure à 48 Volts.

Un moteur électrique de traction 12, 18 est apte à transformer une énergie électrique issue de la batterie 24 en une énergie mécanique pour assurer une traction du véhicule. Un moteur électrique de traction 12, 18 est également apte à fonctionner dans un mode générateur dans lequel le moteur électrique 12, 18 transforme une énergie mécanique en une énergie électrique permettant de recharger la batterie 24, notamment lors d'une phase de freinage récupératif.

Une telle architecture permet au véhicule de fonctionner dans un mode thermique pur, un mode de propulsion hybride, un mode de propulsion électrique pur, un mode 4x4 hybride et un mode 4x4 électrique.

Un superviseur 26 assure le pilotage des différents composants de la chaîne de traction 10. Ce superviseur 26 pourra prendre la forme d'un calculateur comportant une mémoire stockant des instructions logicielles pour la mise en oeuvre du procédé selon l'invention de pilotage de la chaîne de traction 10.

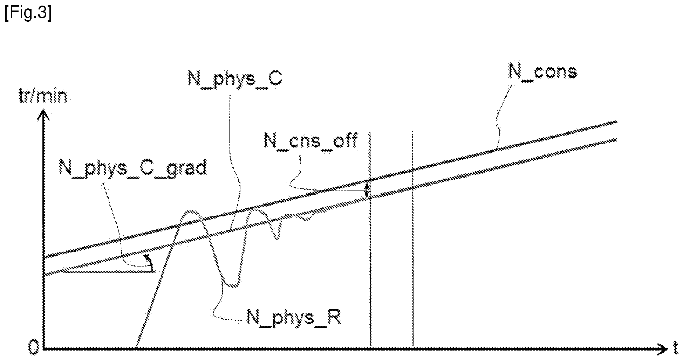

Plus précisément, lors d'une phase de synchronisation d'un régime de la machine motrice 18 avec un régime des roues 19.1 du train 19, le cas échéant à un rapport de démultiplication près, le superviseur 26 détermine un régime de consigne N_cns de la machine motrice 18, tel que cela est montré sur la figure 3. Par "régime", on entend une vitesse de rotation de l'élément correspondant.

Le régime de consigne N_cns est déterminé à partir d'une dérivée en fonction du temps d'un régime cible N_phys_C à atteindre par la machine motrice 18 et d'une durée de retard T_ret relative à l'obtention du régime de consigne N_cns. Le régime cible N_phys_C à atteindre correspond à la vitesse des roues 19.1 le cas échéant au rapport de démultiplication près.

Le superviseur 26 envoie ensuite le régime de consigne N_cns précédemment déterminé à un contrôleur de régime 28 de la machine motrice 18 qui est distinct du superviseur 26. Le superviseur 26 et le contrôleur de régime 28 communiquent entre eux par l'intermédiaire d'un réseau de communication, notamment un réseau de type CAN (pour Controller Area Network en anglais) ou FlexRay (Marque déposée).

La durée de retard T_ret correspond à la durée entre l'instant où le régime de consigne N_cns est généré par un superviseur 26 et l'instant où le régime de consigne N_cns est reçu et traité par le contrôleur de régime 28 de façon à commander la machine motrice 18.

Plus précisément, le régime de consigne N_cns est déterminé à partir de la relation suivante:

$$N\_cns = N\_phys\_C + T\_ret \times d/dt(N\_phys\_C)$$

- N_phys_C étant le régime cible à atteindre par la machine motrice 18,
- T_ret étant la durée de retard relative à l'obtention du régime de consigne.

Ainsi, compte tenu de la prise en compte de la variation (dérivée) du régime souhaité N_phys_C, la consigne N_cns est anticipée afin de minimiser l'erreur finale de régulation.

Le régime réel N_phys_R de la machine motrice 18 est ainsi confondu avec le régime cible souhaité N_phys_C.

Sur la figure 3, N_phys_C_grad correspond à la variation du régime cible souhaité N_phys_C en fonction du temps et l'écart N_cns_off entre le régime de consigne N_cns et le régime cible souhaité N_phys_C est égal au produit entre N_phys_C_grad et la durée de retard T_ret.

Le procédé selon l'invention pourra être mis en oeuvre indifféremment pour une variation de régime de la machine motrice 18 positive (dans le cas où le véhicule accélère) ou négative (dans le cas où le véhicule décélère).

En variante, l'architecture de la chaîne de traction 10 pourra être inversée, c'est-à-dire que le moteur électrique de traction 12 et le moteur thermique 11 sont montés sur le train arrière 19 du véhicule automobile, tandis que le moteur électrique de traction 18, ainsi que le réducteur 22 et le dispositif de couplage et de découplage 23 sont montés sur le train avant 13 du véhicule automobile.

**Revendications**

1. Procédé de pilotage d'une machine motrice (18) montée sur un train (19) de véhicule automobile muni de roues (19.1), ladite machine motrice (18) étant associée à un dispositif de couplage et de découplage (23) apte à sélectivement coupler ou découpler ladite machine motrice (18) avec ledit train (19) du véhicule automobile, **caractérisé en ce que** lors d'une phase de synchronisation d'un régime de la machine motrice (18) avec un régime des roues (19.1), le cas échéant à un rapport de démultiplication près, ledit procédé comporte:

- une étape de détermination d'un régime de consigne (N_cns) de la machine motrice (18) à partir d'une dérivée en fonction du temps d'un régime cible (N_phys_C) à atteindre par la machine motrice (18) et d'une durée de retard (T_ret) relative à l'obtention du régime de consigne (N_cns), et
- une étape d'envoi du régime de consigne (N_cns) précédemment déterminé à un contrôleur de régime (28) de la machine motrice (18).

2. Procédé selon la revendication 1, dans lequel le régime de consigne N_cns de la machine motrice (18) est déterminé à partir de la relation suivante:

$$N\_cns = N\_phys\_C + T\_ret \times d/dt(N\_phys\_C)$$

- N_phys_C étant le régime cible à atteindre par la machine motrice (18),
- T_ret étant la durée de retard relative à l'obtention du régime de consigne.

3. Procédé selon la revendication 1 ou 2, dans lequel la durée de retard (T_ret) relative à l'obtention du régime de consigne (N_cns) correspond à la durée entre :

- un instant où le régime de consigne (N_cns) est généré par un superviseur (26) et
- un instant où le régime de consigne (N_cns) est reçu et traité par le contrôleur de régime (28) distinct du superviseur (26).

4. Procédé selon l'une quelconque des revendications 1 à 3, lequel est mis en oeuvre pour une variation positive d'un régime de la machine motrice (18).

5. Procédé selon l'une quelconque des revendications 1 à 3, lequel est mis en oeuvre pour une variation négative d'un régime de la machine motrice (18).

6. Calculateur comportant une mémoire stockant des instructions logicielles pour la mise en oeuvre du procédé de pilotage d'une machine motrice (18) tel que défini selon l'une quelconque des revendications précédentes.

7. Véhicule automobile comprenant :

- un train (19) muni de roues (19.1),
- une machine motrice (18) montée sur le train (19),
- un dispositif de couplage et de découplage (23) associé à la machine motrice (18) et apte à sélectivement coupler ou découpler ladite machine motrice (18) avec ledit train (19),

comprenant en outre un calculateur selon la revendication 6.

8. Véhicule automobile selon la revendication 7, dans lequel la machine motrice (18) est un moteur électrique de traction.

9. Véhicule selon la revendication 7 ou 8, dans lequel le dispositif de couplage et de découplage (23) est un crabot.

10. Véhicule selon l'une des revendications 7 à 9, comprenant en outre un réducteur de vitesse, le dispositif de couplage et de découplage (23) étant associé au réducteur de vitesse.

11. Véhicule selon l'une des revendications 7 à 10, dans lequel le train (19) est un train arrière du véhicule.

**Patentansprüche**

1. Verfahren zur Steuerung einer an einem mit Rädern (19.1) versehenen Zug (19) eines Kraftfahrzeugs montierten Antriebsmaschine (18), wobei der Antriebsmaschine (18) eine wahlweise kuppelbare oder entkuppelbare Kupplungs- und Entkuppelvorrichtung (23) zugeordnet ist besagte Antriebsmaschine (18) mit besagtem Zug (19) des Kraftfahrzeugs, **dadurch gekennzeichnet, dass** während einer Phase der Synchronisierung einer Geschwindigkeit der Antriebsmaschine (18) mit einer Geschwindigkeit der Räder (19.1), gegebenenfalls innerhalb einer Untersetzungsverhältnis umfasst das Verfahren:

- einen Schritt des Ermittelns einer Sollgeschwindigkeit (N_cns) der Antriebsmaschine (18) aus einer zeitlichen Ableitung einer von der Antriebsmaschine (18) zu erreichenden Zielgeschwindigkeit (N_phys_C) und d'einer Verzögerungszeit ( T_ret) bezüglich der Gewinnung der Sollgeschwindigkeit (N_cns) und
- einen Schritt des Sendens der zuvor ermittelten Sollgeschwindigkeit (N_cns) an einen Geschwindigkeitsregler (28) der Antriebsmaschine (18).

2.  Verfahren nach Anspruch 1, bei dem die Sollgeschwindigkeit N_cns derAntriebsmaschine (18) aus folgender Beziehung ermittelt wird:

$$N\_cns = N\_phys\_C + T\_ret \times d/dt(N\_phys\_C)$$

- N_phys_C ist die von der Antriebsmaschine (18) zu erreichende Zielgeschwindigkeit,
- T_ret ist die Verzögerungszeit relativ zum Erreichen der Sollgeschwindigkeit.

3.  Verfahren nach Anspruch 1 oder 2, bei dem die Verzögerungszeit (T_ret) bezüglich des Erreichens der Sollgeschwindigkeit (N_cns) der Zeit zwischen:

- ein Moment, in dem die Sollgeschwindigkeit (N_cns) von einem Supervisor (26) generiert wird und
- ein Zeitpunkt, zu dem die Sollgeschwindigkeit (N_cns) vom Geschwindigkeitsregler (28) getrennt vom Supervisor (26) empfangen und verarbeitet wird.

4.  Verfahren nach einem der Ansprüche 1 bis 3, das für eine positive Variation einer Geschwindigkeit der Antriebsmaschine (18) durchgeführt wird.

5.  Verfahren nach einem der Ansprüche 1 bis 3, das für eine negative Variation einer Geschwindigkeit der Antriebsmaschine (18) durchgeführt wird.

6.  Computer mit einem Speicher, der Softwareanweisungen zum Implementieren des Verfahrens zur Steuerung einer Antriebsmaschine (18) nach einem der vorhergehenden Ansprüche speichert.

7.  Kraftfahrzeug bestehend aus:

- ein mit Rädern (19.1) versehenes Zugwerk (19),
- eine auf dem Zug (19) montierte Antriebsmaschine (18),
- eine Kopplungs- und Entkopplungsvorrichtung (23), die mit der Antriebsmaschine (18) verbunden ist und in der Lage ist, die Antriebsmaschine (18) wahlweise mit dem Zug (19) zu koppeln oder zu entkoppeln,

weiterhin umfassend einen Rechner nach Anspruch 6.

8.  Kraftfahrzeug nach Anspruch 7, bei dem die Antriebsmaschine (18) ein elektrischer Traktionsmotor ist.

9.  Fahrzeug nach Anspruch 7 oder 8, bei dem die Kupplungs- und Entkupplungseinrichtung (23) eine Klauenkupplung ist.

10. Fahrzeug nach einem der Ansprüche 7 bis 9, weiterhin mit einem Geschwindigkeitsreduzierer, wobei die Kupplungs- und Entkupplungsvorrichtung (23) dem Geschwindigkeitsreduzierer zugeordnet ist.

11. Fahrzeug nach einem der Ansprüche 7 bis 10, bei dem die Achse (19) eine Hinterachse des Fahrzeugs ist.

**Claims**

1.  Method for controlling a driving machine (18) mounted on a train (19) of a motor vehicle fitted with wheels (19.1), said driving machine (18) being associated with a coupling and uncoupling device (23) capable of selectively coupling or decoupling said driving machine (18) with said train (19) of the motor vehicle, **characterized in that** during a phase of synchronization of a speed of the driving machine (18) with a speed of the wheels (19.1), where appropriate to within a reduction ratio, said method comprises:

- a step of determining a setpoint speed (N_cns) of the driving machine (18) from a derivative as a function of time of a target speed (N_phys_C) to be reached by the driving machine (18) and d 'a delay time (T_ret) relating to obtaining the setpoint speed (N_cns), and
- a step of sending the setpoint speed (N_cns) previously determined to a speed controller (28) of the prime mover (18).

2. Method according to claim 1, in which the target speed N_cns of the prime mover (18) is determined from the following relationship:

$$N\_cns = N\_phys\_C + T\_ret \times d/dt(N\_phys\_C)$$

- N_phys_C being the target speed to be reached by the prime mover (18),
- T_ret being the delay time relative to obtaining the setpoint speed.

3. Method according to Claim 1 or 2, in which the delay time (T_ret) relating to obtaining the set speed (N_cns) corresponds to the time between:

- a moment when the setpoint speed (N_cns) is generated by a supervisor (26) and
- a time when the setpoint speed (N_cns) is received and processed by the speed controller (28) separate from the supervisor (26).

4. Method according to any one of claims 1 to 3, which is implemented for a positive variation of a speed of the prime mover (18).

5. Method according to any one of claims 1 to 3, which is implemented for a negative variation of a speed of the prime mover (18).

6. Computer comprising a memory storing software instructions for implementing the method for controlling a prime mover (18) as defined according to any one of the preceding claims.

7. Motor vehicle comprising:

- a train (19) provided with wheels (19.1),
- a driving machine (18) mounted on the train (19),
- a coupling and decoupling device (23) associated with the driving machine (18) and capable of selectively coupling or uncoupling said driving machine (18) with said train (19),

further comprising a calculator according to claim 6.

8. Motor vehicle according to Claim 7, in which the prime mover (18) is an electric traction motor.

9. Vehicle according to Claim 7 or 8, in which the coupling and uncoupling device (23) is a dog clutch.

10. Vehicle according to one of Claims 7 to 9, further comprising a speed reducer, the coupling and uncoupling device (23) being associated with the speed reducer.

11. Vehicle according to one of Claims 7 to 10, in which the axle (19) is a rear axle of the vehicle.

[Fig.1]

[Fig.2]

[Fig.3]

**EP 4 061 662 B1**

**Documents brevets cités dans la description**

- FR 2954441 A1